# EUROPEAN PATENT SPECIFICATION

(11) **EP 1 480 124 B1**
(45) Date of publication and mention of the grant of the patent: **02.04.2014**
(21) Application number: 04252689.7
(22) Date of filing: 07.05.2004
(51) Int. Cl.: G06F 9/46

(54) **Method and system for associating resource pools with operating system partitions**
Verfahren und Vorrichtung zur Zuordnung von Betriebsmittelpools zu Betriebssystempartitionen
Système et procédé d'association de groupes de ressources à des partitions de système d'exploitation

(30) Priority: 09.05.2003 US 469558 P; 29.01.2004 US 768303
(43) Date of publication of application: 24.11.2004
(73) Proprietor: Oracle America, Inc., Redwood City, CA 94065 (US)
(72) Inventor: Leonard, Ozgur C., San Mateo CA 94402 (US); Tucker, Andrew G., Menlo Park CA 95025 (US); Dorofeev, Andrei V., San Jose CA 95129 (US)
(74) Representative: Harris, Ian Richard

(56) References cited:
- EP-A- 1 300 766
- US-A1- 2002 156 824
- SUN MICROSYSTEMS, INC: "Sun EnterpriseTM 10000 Server: Dynamic System Domains"[Online] 26 February 2003 (2003-02-26), XP002332946 Retrieved from the Internet: URL:http://www.sun.com/servers/highend/whi tepapers/domains.html?facet=-1> [retrieved on 2005-06-21]
- deel P-H KAMP ET AL: 'Jails:Confining the omnipotent..', page 1-15, XP2257980

## Description

### Field of the Invention

The present invention relates to computer systems, and in particular to the allocation of resources in such systems.

### Background of the Invention

In many computer implementations, it is desirable to be able to specify which resources are available to which entities. For example, it would be desirable to specify that for a certain group of applications, a certain set of processors and a certain maximum amount of memory should be used. Similarly, for another set of applications, another set of processors and another maximum amount of memory may be specified. This ability to associate resources with entities enables a system administrator to better control how the resources of a system are used. This control may be used in many contexts to achieve a number of desirable results, for example, to prevent certain processes from consuming an inordinate amount of system resources, to enforce fairness in resource usage among various entities, to prioritize resource usage among different entities, etc. Current systems allow certain resources to be associated with certain entities, such as application packages. However, there are still a number of entities with which it is currently not possible to associate a set of resources.

US 2002/0156824 discloses a processor allocation mechanism for a logically partitioned computer system. A hypervisor base provided immediately above the hardware is responsible for enforcing the logical partitioning. Above the hypervisor base is a set of operating system kernels, which may or may not be the same as one another, so that different partitions may run different operating systems.

An article by P.-H. Kamp et al.: "Jails: Confming the omnipotent root."; Proceedings of the 2nd International System Administration and Networking Conference (SANE 2000); 22-25 May 2000; Maastricht, The Netherlands; pages 1-15 describes the FreeBSD "Jail" facility for partitioning an operating system environment.

### Summary of the Invention

Accordingly, the present invention provides a method and computer system as defined in the appended claims.

In accordance with one embodiment of the present invention, there is provided a mechanism for enabling resource pools to be associated with one or more operating system partitions. More specifically, in one embodiment, it is possible to establish a plurality of non-global operating system partitions within a global operating system environment provided by an operating system and having a kernel. Each non-global partition serves to isolate processes running within that non-global partition from other non-global partitions within the global operating system environment, wherein enforcement of boundaries between the non-global operating system partitions is carried out by the kernel. Each non-global partition may have associated therewith a resource pool. The resource pool sets forth a set of resources (e.g. processors, memory, etc.) that are available to that non-global partition. During runtime, this association is enforced to ensure that processes running within that non-global partition are limited to utilizing only the resources in the resource pool. By associating a resource pool with a non-global partition in this manner, it is possible to easily and conveniently set limits on what is available to a non-global partition.

### Brief Description of the Drawings

Various embodiments of the invention will now be described in detail by way of example only with reference to the following drawings:
Fig. 1 is a functional diagram of an operating system environment comprising a global zone and one or more non-global zones, in accordance with one embodiment of the present invention.
Fig. 2 is a modified version of Fig. 1 highlighting one of the non-global zones and showing an association data structure which associates the non-global zone with a resource pool.
Fig. 3 is an operational flow diagram illustrating the operation of one embodiment of the present invention.
Fig. 4 is a modified version of Fig. 2 showing the changing of association from one resource pool to another.
Fig. 5 is a block diagram of a general purpose computer system.

### Overview

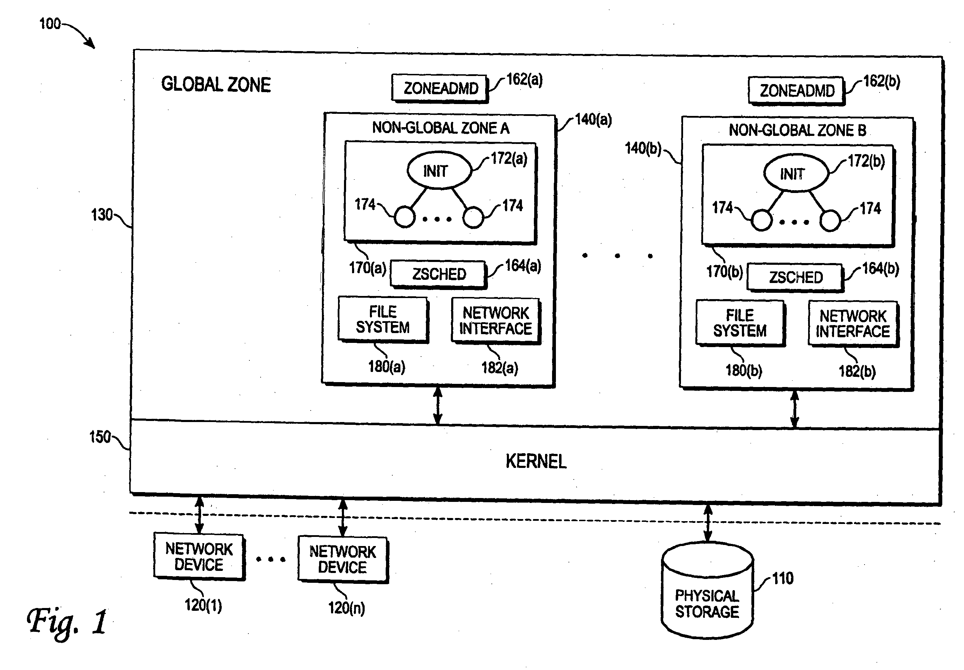

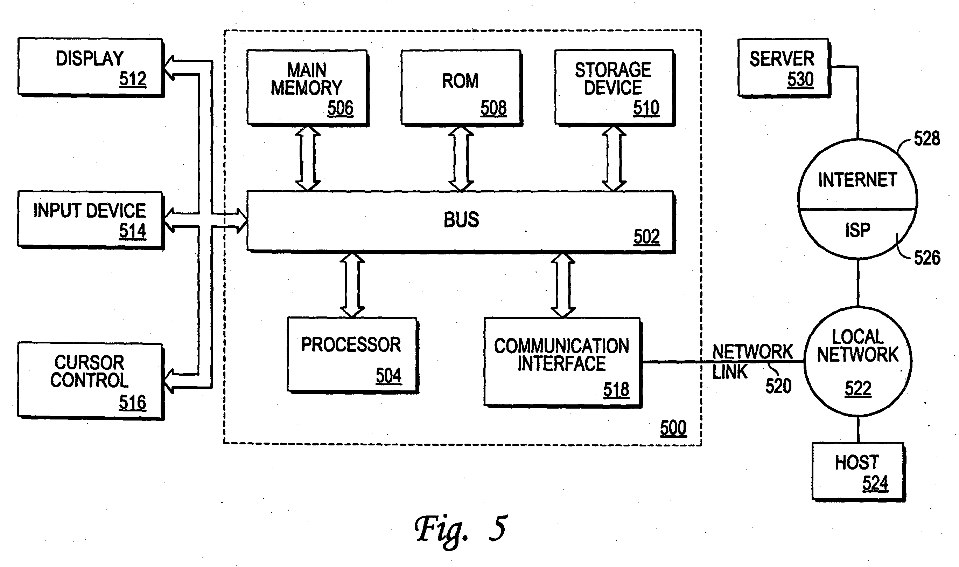

Fig. 1 illustrates a functional block diagram of an operating system (OS) environment 100 in accordance with one embodiment of the present invention. OS environment 100 may be derived by executing an OS in a general-purpose computer system, such as computer system 500 illustrated in Fig. 5, for example. For illustrative purposes, it will be assumed that the OS is the Solaris operating system from Sun Microsystems, Inc. of Santa Clara, California (Solaris is a trademark of Sun Microsystems, Inc). However, it should be noted that the concepts taught herein may be applied to any OS, including but not limited to Unix, Linux, Windows, MacOS, etc.

As shown in Fig. 1, OS environment 100 may comprise one or more zones (also referred to herein as partitions), including a global zone 130 and zero or more non-global zones 140. The global zone 130 is the general OS environment that is created when the OS is booted and executed, and serves as the default zone in which processes may be executed if no non-global zones 140 are created. In the global zone 130, administrators and/or processes having the proper rights and privileges can perform generally any task and access any device/resource that is available on the computer system on which the OS is run. Thus, in the global zone 130, an administrator can administer the entire computer system. In one embodiment, it is in the global zone 130 that an administrator executes processes to configure and to manage the non-global zones 140.

The non-global zones 140 represent separate and distinct partitions of the OS environment 100. One of the purposes of the non-global zones 140 is to provide isolation. In one embodiment, a non-global zone 140 can be used to isolate a number of entities, including but not limited to processes 170, one or more file systems 180, and one or more logical network interfaces 182. Because of this isolation, processes 170 executing in one non-global zone 140 cannot access or affect processes in any other zone. Similarly, processes 170 in a non-global zone 140 cannot access or affect the file system 180 of another zone, nor can they access or affect the network interface 182 of another zone. As a result, the processes 170 in a non-global zone 140 are limited to accessing and affecting the processes and entities in that zone. Isolated in this manner, each non-global zone 140 behaves like a virtual standalone computer. While processes 170 in different non-global zones 140 cannot access or affect each other, it should be noted that they may be able to communicate with each other via a network connection through their respective logical network interfaces 182. This is similar to how processes on separate standalone computers communicate with each other.

Having non-global zones 140 that are isolated from each other may be desirable in many applications. For example, if a single computer system running a single instance of an OS is to be used to host applications for different competitors (e.g. competing websites), it would be desirable to isolate the data and processes of one competitor from the data and processes of another competitor. That way, it can be ensured that information will not be leaked between the competitors. Partitioning an OS environment 100 into non-global zones 140 and hosting the applications of the competitors in separate non-global zones 140 is one possible way of achieving this isolation.

In one embodiment, each non-global zone 140 may be administered separately. More specifically, it is possible to assign a zone administrator to a particular non-global zone 140 and grant that zone administrator rights and privileges to manage various aspects of the non-global zone 140. With such rights and privileges, the zone administrator can perform any number of administrative tasks that affect the processes and other entities within the non-global zone 140. However, the zone administrator cannot change or affect anything in any other non-global zone 140 or the global zone 130. Thus, in the above example, each competitor can administer his/her zone, and hence, his/her own set of applications, but cannot change or affect the applications of a competitor. In one embodiment, to prevent a non-global zone 140 from affecting other zones, the entities in a non-global zone 140 are generally not allowed to access or control any of the physical devices of the computer system.

In contrast to a non-global zone administrator, a global zone administrator with proper rights and privileges may administer all aspects of the OS environment 100 and the computer system as a whole. Thus, a global zone administrator may, for example, access and control physical devices, allocate and control system resources, establish operational parameters, etc. A global zone administrator may also access and control processes and entities within a non-global zone 140.

In one embodiment, enforcement of the zone boundaries is carried out by the kernel 150. More specifically, it is the kernel 150 that ensures that processes 170 in one non-global zone 140 are not able to access or affect processes 170, file systems 180, and network interfaces 182 of another zone (non-global or global). In addition to enforcing the zone boundaries, kernel 150 also provides a number of other services. These services include but are not limited to mapping the network interfaces 182 of the non-global zones 140 to the physical network devices 120 of the computer system, and mapping the file systems 180 of the non-global zones 140 to an overall file system and a physical storage 110 of the computer system. The operation of the kernel 150 will be discussed in greater detail in a later section.

### Non-Global Zone States

In one embodiment, a non-global zone 140 may take on one of four states: (1) Configured; (2) Installed; (3) Ready; and (4) Running. When a non-global zone 140 is in the Configured state, it means that an administrator in the global zone 130 has invoked an operating system utility (in one embodiment, zonecfg(1m)) to specify all of the configuration parameters of a non-global zone 140, and has saved that configuration in persistent physical storage 110. In configuring a non-global zone 140, an administrator may specify a number of different parameters. These parameters may include, but are not limited to, a zone name, a zone path to the root directory of the zone's file system 180, specification of one or more file systems to be mounted when the zone is readied, specification of zero or more network interfaces, specification of devices to be configured when the zone is created, and specification of a resource pool association.

Once a zone is in the Configured state, a global administrator may invoke another operating system utility (in one embodiment, zoneadm(1m)) to put the zone into the Installed state. When invoked, the operating system utility interacts with the kernel 150 to install all of the necessary files and directories into the zone's root directory, or a subdirectory thereof.

To put an Installed zone into the Ready state, a global administrator invokes an operating system utility (in one embodiment, zoneadm(1m) again), which causes a zoneadmd process 162 to be started (there is a zoneadmd process associated with each non-global zone). In one embodiment, zoneadmd 162 runs within the global zone 130 and is responsible for managing its associated non-global zone 140. After zoneadmd 162 is started, it interacts with the kernel 150 to establish the non-global zone 140. In establishing a non-global zone 140, a number of operations are performed, including but not limited to assigning a zone ID, starting a zsched process 164 (zsched is a kernel process; however, it runs within the non-global zone 140, and is used to track kernel resources associated with the non-global zone 140), establishing a file system 180, plumbing network interfaces 182, configuring devices, etc. As part of or after establishing the zone 140, a particular resource pool may be associated with the zone 140, if such an association was specified in the configuration information of the zone 140. If no association was specified in the configuration information, the zone 140 may be associated with a default resource pool or no resource pool at all. These and other operations put the non-global zone 140 into the Ready state to prepare it for normal operation.

Putting a non-global zone 140 into the Ready state gives rise to a virtual platform on which one or more processes may be executed. This virtual platform provides the infrastructure necessary for enabling one or more processes to be executed within the non-global zone 140 in isolation from processes in other non-global zones 140. The virtual platform also makes it possible to isolate other entities such as file system 180 and network interfaces 182 within the non-global zone 140, so that the zone behaves like a virtual standalone computer. Notice that when a non-global zone 140 is in the Ready state, no user or non-kernel processes are executing inside the zone (recall that zsched is a kernel process, not a user process). Thus, the virtual platform provided by the non-global zone 140 is independent of any processes executing within the zone. Put another way, the zone (and hence the virtual platform) exists even if no user or non-kernel processes are executing within the zone. This means that a non-global zone 140 can remain in existence from the time it is created until either the zone or the OS is terminated. The life of a non-global zone 140 need not be limited to the duration of any user or non-kernel process executing within the zone.

After a non-global zone 140 is in the Ready state, it can be transitioned into the Running state by executing one or more user processes in the zone. In one embodiment, this is done by having zoneadmd 162 start an init process 172 in its associated zone. Once started, the init process 172 looks in the file system 180 of the non-global zone 140 to determine what applications to run. The init process 172 then executes those applications to give rise to one or more other processes 174. In this manner, an application environment is initiated on the virtual platform of the non-global zone 140. In this application environment, all processes 170 are confined to the non-global zone 140; thus, they cannot access or affect processes, file systems, or network interfaces in other zones. The application environment exists so long as one or more user processes are executing within the non-global zone 140.

After a non-global zone 140 is in the Running state, its associated zoneadmd 162 can be used to manage it. Zoneadmd 162 can be used to initiate and control a number of zone administrative tasks. These tasks may include, for example, halting and rebooting the non-global zone 140. When a non-global zone 140 is halted, it is brought from the Running state down to the Installed state. In effect, both the application environment and the virtual platform are terminated. When a non-global zone 140 is rebooted, it is brought from the Running state down to the Installed state, and then transitioned from the Installed state through the Ready state to the Running state. In effect, both the application environment and the virtual platform are terminated and restarted. These and many other tasks may be initiated and controlled by zoneadmd 162 to manage a non-global zone 140 on an ongoing basis during regular operation.

### Resource Pools and Association with Zones

As noted previously, when a non-global zone 140 is configured, a resource pool association is specified for the zone. This association indicates that the processes 170 running within the non-global zone 140 are limited to utilizing only the resources in the specified resource pool.

For present purposes, a resource pool may be anything (including but not limited to a data structure) that includes and/or specifies one or more resources that can be used or consumed. The resources that can be specified in a resource pool may be any type of system resource, including but not limited to one or more processors and a maximum amount of memory that can be consumed. The resources in a resource pool may be a subset of all of the resources available in a system. For example, if the OS is executed on a computer system having four processor (A, B, C and D) and 10GB of memory, the resource pool may include just processors A and B and 2GB of memory. This means that if a non-global zone 140 is associated with the resource pool, the processes 170 running within the non-global zone 140 will be able to utilize only processors A and B and up to 2GB of the 10GB of memory.

In one embodiment, a resource pool is specified by a global administrator. A resource pool specification and its association with a non-global zone 140 cannot be changed by a zone administrator. For example, if a resource pool X has been specified to include processors A and B and 2GB of memory, and has been associated with non-global zone 140(a), the zone administrator for zone 140(a) cannot change pool X to include processor C, or increase the memory to 3GB, nor can he/she change the association of pool X with zone 140(a). That way, a zone administrator cannot increase, decrease, or change in any way the resources that have been assigned to his/her non-global zone 140.

In one embodiment, it is possible for a global administrator to change the specification of a resource pool even after it has been specified. In addition, a global administrator may change the association between a resource pool and a non-global zone 140, even after the zone is up and running. This will be discussed in greater detail in a later section.

### Sample Operation

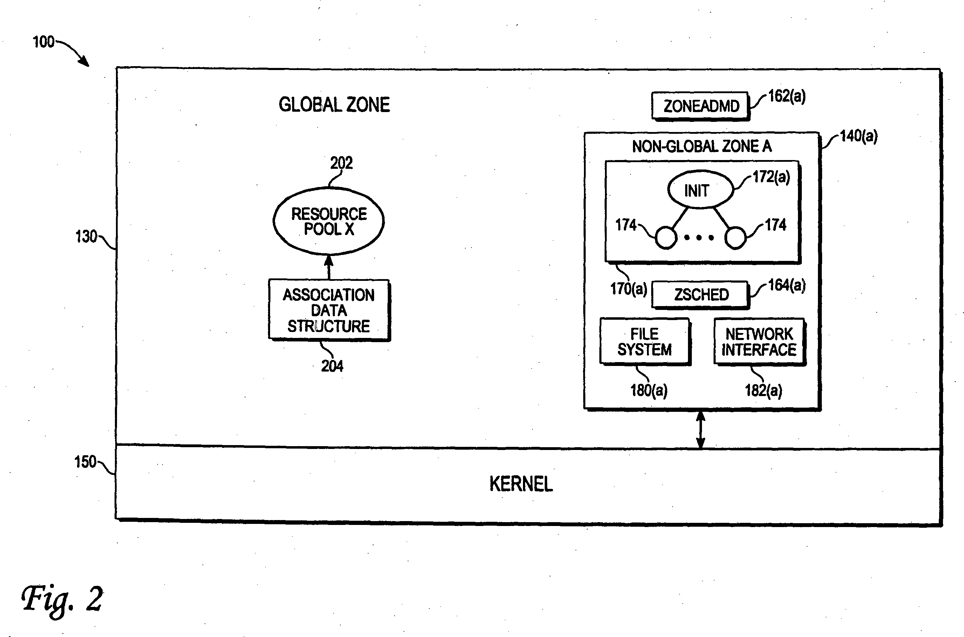

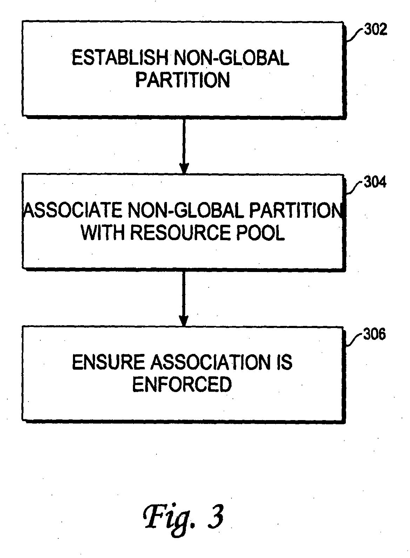

To illustrate an embodiment of the present invention in greater detail, reference will now be made to a sample operation. In the following discussion, reference will be made to Fig. 2, which is a modified version of Fig. 1 highlighting non-global zone 140(a) as the subject zone, and also to the flowchart of Fig. 3. It will be assumed that zone 140(a) has been configured to have an association with resource pool X 202, which includes processors A and B and 2GB of memory. It will also be assumed that zone 140(a) is currently in the Installed state.

To transition zone 140(a) from the Installed state to the Ready state, a global administrator invokes an operating system utility (in one embodiment, zoneadm(1m)), which causes a zoneadmd process 162(a) to be started for zone 140(a). When zoneadmd 162(a) starts, it consults the configuration information for zone 140(a). Armed with the configuration information, zoneadmd 162(a) interacts with the kernel 150 to establish (block 302, Fig. 3) the non-global zone 140(a). In establishing zone 140(a), zoneadmd 162(a) interacts with the kernel 150 to perform a number of operations, including but not limited to assigning a unique zone ID to zone 140(a), starting a zsched process 164(a) within the zone 140(a), establishing file system 180(a), plumbing network interfaces 182(a), and configuring devices.

As part of or after establishing the zone 140(a), based upon the association specified in the configuration information, zone 140(a) is associated (block 304, Fig. 3) with resource pool X 202. This association (between the zone ID and a reference to the resource pool) is maintained in an association data structure 204. After these and perhaps other operations are performed, the virtual platform of the zone 140(a) is created. The zone 140(a) is thus put into the Ready state, and is prepared for normal operation.

At some point, a global administrator invokes zoneadmd 162(a) to transition the zone 140(a) from the Ready state to the Running state. In response to this invocation, zoneadmd 162(a) interacts with the kernel 150 to start the init process 172(a) in zone 140(a). When init 172(a) is started, the kernel 150 inserts into a data structure associated with init 172(a) the zone ID of zone 140(a). In addition, based upon the association between zone 140(a) and resource pool X 202 contained in association data structure 204, the kernel 150 also inserts into the data structure associated with init 172(a) a reference to resource pool X 202. In this manner, init 172(a) is bound to both zone 140(a) and resource pool X 202.

Once started, init 172(a) looks through certain portions of the file system 180(a) for applications to execute, and executes those applications, thereby starting one or more other processes 174. These processes 174, which are child processes of init 172(a), may also start their own child processes (not shown). Thus, in zone 140(a), init 172(a) may have a plurality of child processes 174, grandchild processes, and so on. In one embodiment, when a child process is started, that process inherits the binding information (the zone ID and reference to the resource pool X 202) of its parent. Thus, all of the processes 170(a) started by init 172(a) or a child, grandchild, etc., of init 172(a) are bound to zone 140(a) and resource pool X 202.

In the course of operation, the processes 170(a) within zone 140(a) will generate work, tasks, etc., that need to be assigned to processors to perform. This work may, for example, take the form of threads. In one embodiment, when assigning work to processors, the kernel 150 first determines which process 170(a) is originating the work. The kernel 150 then checks the data structure associated with that process 170(a) to determine the resource pool with which that process 170(a) is associated. If the process 170(a) is associated with a resource pool (in this example, it is resource pool X 202), then the kernel 150 determines which processors are included in that resource pool 202. The kernel 150 then assigns the work to just the processors (processors A and B in the current example) in that resource pool 202.

During operation, the kernel 150 may also receive memory allocation requests from the processes 170(a) in zone 140(a). In one embodiment, when the kernel 150 receives such a request, it determines the process 170(a) that originated the request. The kernel 150 then checks the data structure associated with that process 170(a) to determine the zone ID and the resource pool with which that process is associated. If the process 170(a) is associated with a resource pool (in this example, it is resource pool X 202), then the kernel 150 determines how much maximum memory usage has been specified in the resource pool (2 GB in the current example). The kernel 150 then determines whether granting the current memory allocation request would cause the maximum memory usage to be exceeded (in one embodiment, the kernel 150 maintains a running count of how much memory has been allocated to all of the processes associated with the resource pool). If not, the kernel 150 grants the memory allocation request, allocates the requested memory, and updates the allocated memory count for zone 140(a). However, if granting the request would cause the maximum memory usage to be exceeded, then the kernel 150 will either: (1) deny the request; or (2) deallocate enough memory from one or more other processes (e.g. processes 170(a) within zone 140(a)) to enable the memory request to be granted without exceeding the maximum memory usage, and then grant the request. In this manner, the kernel 150 ensures (block 306, Fig. 3) that the association between zone 140(a) and resource pool X 202 is enforced. Put another way, the kernel 150 ensures that the processes 170(a) within zone 140(a) are allowed to utilize only the resources included in resource pool X 202.

### View of Resources by Zone Administrator

As discussed above, a number of processes 170(a) may be executed within zone 140(a). One of these processes 170(a) may be a process that allows a zone administrator to log in to the zone 140(a) to perform administrative tasks. Such a process 170(a) may enable the zone administrator to view information pertaining to the resources that are available in the zone 140(a) (for example, the available processors and memory). In one embodiment, such a process 170(a) allows a zone administrator to view information pertaining only to those resources that are included in the resource pool (resource pool X 202 in the current example) to which the zone 140(a) is bound. Even if there are other resources in the system, the zone administrator is not allowed to be made aware of them. In one embodiment, this restriction is enforced by the kernel 150 as follows.

When a process 170(a) submits a request to the kernel 150 to obtain information pertaining to the resources available to zone 140(a), the kernel 150 checks the data structure associated with that process 170(a) to determine the resource pool with which that process is associated (resource pool X 202 in the current example). The kernel 150 then determines the resources that are included in that resource pool 202. The kernel 150 thereafter provides to the process 170(a) information pertaining only to those resources (processors A and B and 2GB of memory in the current example). As a result, the process 170(a) can provide only that information to the zone administrator. The practical effect is that the zone administrator is able to see only the resources that have been associated with zone 140(a).

### Change of Resources in Resource Pool or Change of Association

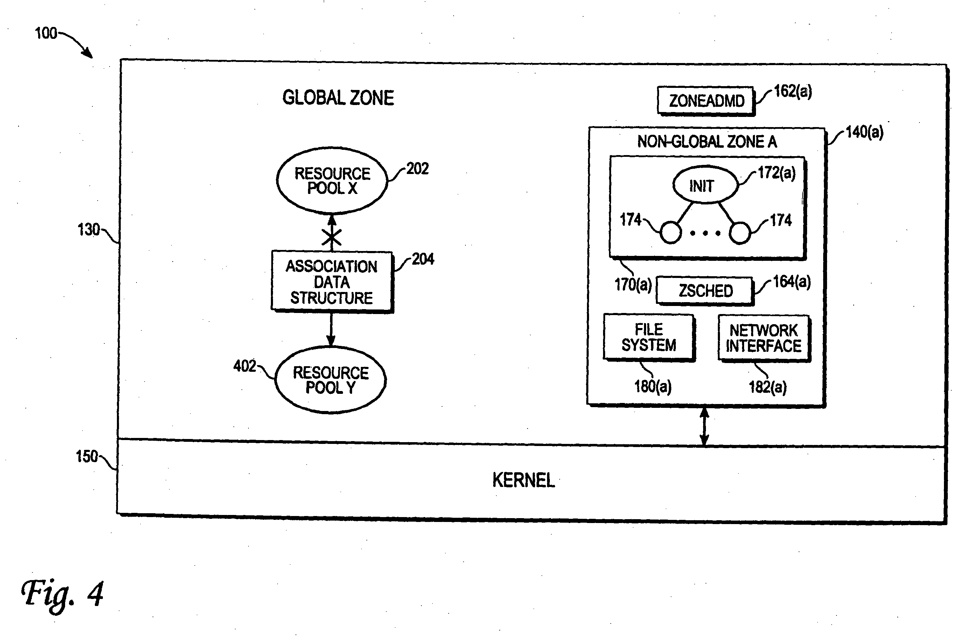

As noted previously, it is possible for a global administrator to change the resources that are included in a resource pool. For example, resource pool X 202 may be changed to include processors A, B, and C instead of just A and B, or it may be changed to include only processor A instead of A and B. It is also possible for a global administrator to change the resource pool-zone association. For example, the global administrator may cause zone 140(a) to be associated with resource pool Y 402 (Fig. 4) instead of resource pool X 202. These changes may be made for the most part at any time, including after a non-global zone 140 is already in the running state.

From the kernel's 150 perspective, a change in the resources included in a resource pool does not pose much of a problem. The next time the kernel 150 consults the resource pool, it simply sees a different set of resources that it can utilize.

An association change, however, calls for a bit more processing. Recall from previous discussion that because zone 140(a) is associated with resource pool X 202, all of the processes 170(a) in zone 140(a) are bound to resource pool X 202. More specifically, the data structure associated with each process 170(a) contains a reference to resource pool X 202. If the association for zone 140(a) is changed such that zone 140(a) is now associated with resource pool Y 402 instead of resource pool X 202, then these data structures should be changed to remove the reference to resource pool X 202 and to add a reference to resource pool Y 402. In one embodiment, this is done by the kernel 150.

More specifically, using Fig. 4 as an example, when a global administrator submits a request to the kernel 150 to change the resource pool association for a zone 140(a) from one resource pool X 202 to another resource pool Y 402, the kernel 150 updates the association data structure 204 for that zone 140(a) to indicate that the zone 140(a) is now associated with the new resource pool Y 402 instead of the former resource pool X 202. In addition, the kernel 150 processes the data structure associated with each of the processes 170(a) in the zone 140(a) to remove the reference to resource pool X 202 and to add a reference to resource pool Y 402. Each of the processes 170(a) is thus bound/associated with the new resource pool Y 402. Once that is done, the kernel 150 can operate in the same manner as discussed above to ensure that the processes 170(a) in zone 140(a) are allowed to utilize only the resources in resource pool Y 402.

### Hardware Overview

Figure 5 is a block diagram that illustrates a computer system 500 in which an embodiment of the invention may be implemented. Computer system 500 includes a bus 502 for facilitating information exchange, and one or more processors 504 coupled to bus 502 for processing information. Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions by processor 504. Computer system 500 may further include a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

In computer system 500, bus 502 may be any mechanism and/or medium that enables information, signals, data, etc., to be exchanged between the various components. For example, bus 502 may be a set of conductors that carries electrical signals. Bus 502 may also be a wireless medium (e.g. air) that carries wireless signals between one or more of the components. Bus 502 may also be a medium (e.g. air) that enables signals to be capacitively exchanged between one or more of the components. Bus 502 may further be a network connection that connects one or more of the components. Overall, any mechanism and/or medium that enables information, signals, data, etc., to be exchanged between the various components may be used as bus 502.

Bus 502 may also be a combination of these mechanisms/media. For example, processor 504 may communicate with storage device 510 wirelessly. In such a case, the bus 502, from the standpoint of processor 504 and storage device 510, would be a wireless medium, such as air. Further, processor 504 may communicate with ROM 508 capacitively. In this instance, the bus 502 would be the medium (such as air) that enables this capacitive communication to take place. Further, processor 504 may communicate with main memory 506 via a network connection. In this case, the bus 502 would be the network connection. Further, processor 504 may communicate with display 512 via a set of conductors. In this instance, the bus 502 would be the set of conductors. Thus, depending upon how the various components communicate with each other, bus 502 may take on different forms. Bus 502, as shown in Fig. 5, functionally represents all of the mechanisms and/or media that enable information, signals, data, etc., to be exchanged between the various components.

Computer system 500 may be used to implement the techniques described herein. According to one embodiment of the invention, those techniques are performed by computer system 500 in response to processor 504 executing one or more sequences of one or more instructions contained in main memory 506. Such instructions may be read into main memory 506 from another machine-readable medium, such as storage device 510. Execution of the sequences of instructions contained in main memory 506 causes processor 504 to perform the process steps described herein. In alternative embodiments, hard-wired circuitry may be used in place of or in combination with software instructions to implement the techniques. Thus, the techniques described herein are not limited to any specific combination of hardware circuitry and software.

The term "machine-readable medium" as used herein refers to any medium that participates in providing data that causes a machine to operation in a specific fashion. In an embodiment implemented using computer system 500, various machine-readable media may be involved, for example, in providing instructions to processor 504 for execution. Such media may take many forms, including but not limited to, non-volatile media, volatile media, and transmission media. Non-volatile media include, for example, optical or magnetic disks, such as storage device 510. Volatile media include dynamic memory, such as main memory 506. Transmission media include coaxial cables, copper wire and fiber optics, including the wires that comprise bus 502. Transmission media can also take the form of acoustic or light waves, such as those generated during radio-wave or infra-red data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, an EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 504 for execution. For example, the instructions may initially be carried on a magnetic disk of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic and/or optical signals that carry digital data streams. The signals through the various networks and the signals on network link 520 and through communication interface 518, which carry the digital data to and from computer system 500, are example forms of carrier waves transporting the information.

Computer system 500 can send messages and receive data, including program code, through the network(s), network link 520 and communication interface 518. In the Internet example, a server 530 might transmit requested code for an application program through Internet 528, ISP 526, local network 522 and communication interface 518.

The received code may be executed by processor 504 as it is received, and/or stored in storage device 510, or other non-volatile storage for later execution. In this manner, computer system 500 may obtain application code in the form of a carrier wave.

The foregoing descriptions of embodiments of the present invention have been presented for purposes of illustration in order to enable a person skilled in the art to appreciate and implement the invention. They are provided in the context of particular applications and their requirements, but are not intended to be exhaustive or to limit the present invention to the forms disclosed. Accordingly, many modifications and variations will be apparent to practitioners skilled in the art, and the scope of the present invention is defined by the appended claims.

## Claims

1. A method performed by an operating system executed on a computer system (500), the method comprising:
establishing, within a global operating system environment (100) provided by the operating system and having a kernel (150), a plurality of non-global operating system partitions (140a, 140b) which serve to isolate processes (170) running within one non-global operating system partition from other non-global operating system partitions within the global operating system environment, wherein enforcement of boundaries between the non-global operating system partitions is carried out by the kernel;
associating, in an association data structure (204), a zone ID for a particular non-global operating system partition with a reference to a first resource pool (202) comprising one or more resources, wherein the resources in the first resource pool are a subset of the total set of resources available on the computer system; and
ensuring that processes running within the particular non-global operating system partition are allowed to utilize only the resources in the first resource pool, including associating each process running within the particular non-global operating system partition with the first resource pool in a data structure associated with the process using the zone ID and the reference to the first resource pool;
receiving an indication that the particular non-global operating system partition is to be associated with a second resource pool instead of the first resource pool, wherein the second resource pool is different from the first resource pool, and wherein the second resource pool comprises one or more resources;
associating, in the association data structure, the zone ID for the particular non-global operating system partition with a reference to the second resource pool instead of the first resource pool; and
ensuring that processes running within the particular non-global operating system partition are allowed to utilize only the resources in the second resource pool including associating each process running within the particular non-global operating system partition with the second resource pool instead of the first resource pool in the data structure associated with the process using the zone ID and the reference to the second resource pool.

2. The method of claim 1, wherein the first resource pool comprises one or more processors (504).

3. The method of claim 2, wherein ensuring comprises:
assigning work from processes running within the particular non-global operating system partition to only the one or more processors in the first resource pool.

4. The method of claim 1, wherein the first resource pool comprises an indication of a maximum amount of memory (506) that can be consumed.

5. The method of claim 4, wherein ensuring comprises:
receiving, from a particular process running within the particular non-global operating system partition, a memory allocation request;
determining whether granting the memory allocation request would cause the maximum amount of memory that can be consumed to be exceeded; and
in response to a determination that granting the memory allocation request would not cause the maximum amount of memory that can be consumed to be exceeded, granting the memory allocation request.

6. The method of claim 5, wherein ensuring further comprises:
in response to a determination that granting the memory allocation request would cause the maximum amount of memory that can be consumed to be exceeded, deallocating sufficient memory from one or more other processes to enable the memory allocation request to be granted without causing the maximum amount of memory that can be consumed to be exceeded; and
granting the memory allocation request.

7. The method of any preceding claim, wherein the operating system executes on a computer system (500), and wherein the method further comprises:
receiving, from a particular process running within the particular non-global operating system partition, a request for information pertaining to all resources; and
providing, to the particular process, information pertaining only to the one or more resources in the first resource pool, even though the computer system comprises other resources.

8. A computer program comprising instructions for implementing the method of any preceding claim.

9. A computer system comprising:
an operating system, wherein said operating system includes:
a kernel (150);
a mechanism for establishing, within a global operating system environment (100) provided by the operating system, a plurality of non-global operating system partitions (140a, 140b) which serve to isolate processes (170) running within one non-global operating system partition from other non-global operating system partitions within the global operating system environment, wherein enforcement of boundaries between the non-global operating system partitions is carried out by the kernel;
a mechanism for associating, in an association data structure (204), a zone ID for a particular non-global operating system partition with a reference to a first resource pool (202) comprising one or more resources, wherein the resources in the first resource pool are a subset of the total set of resources available on the computer system;
a mechanism for ensuring that processes running within the particular non-global operating system partition are allowed to utilize only the resources in the first resource pool including a mechanism for associating each process running within the particular non-global operating system partition with the first resource pool in a data structure associated with the process using the zone ID and the reference to the first resource pool;
a mechanism for receiving an indication that the particular non-global operating system partition is to be associated with a second resource pool instead of the first resource pool, wherein the second resource pool is different from the first resource pool, and wherein the second resource pool comprises one or more resources;
a mechanism for associating, in the association data structure, the zone ID for the particular non-global operating system partition with a reference to the second resource pool instead of the first resource pool; and
a mechanism for ensuring that processes running within the particular non-global operating system partition are allowed to utilize only the resources in the second resource pool including a mechanism for associating each process running within the particular non-global operating system partition with the second resource pool instead of the first resource pool in the data structure associated with the process using the zone ID and the reference to the second resource pool.

10. The computer system of claim 9, wherein the first resource pool comprises one or more processors (504).

11. The computer system of claim 10, wherein the mechanism for ensuring comprises:
a mechanism for assigning work from processes running within the particular non-global operating system partition to only the one or more processors in the first resource pool.

12. The computer system of claim 9, wherein the first resource pool comprises an indication of a maximum amount of memory that can be consumed.

13. The computer system of claim 12, wherein the mechanism for ensuring comprises:
a mechanism for receiving, from a particular process running within the particular non-global operating system partition, a memory allocation request;
a mechanism for determining whether granting the memory allocation request would cause the maximum amount of memory that can be consumed to be exceeded; and
a mechanism for granting, in response to a determination that granting the memory allocation request would not cause the maximum amount of memory that can be consumed to be exceeded, the memory allocation request.

14. The computer system of claim 13, wherein the mechanism for ensuring further comprises:
a mechanism for deallocating, in response to a determination that granting the memory allocation request would cause the maximum amount of memory that can be consumed to be exceeded, sufficient memory from one or more other processes to enable the memory allocation request to be granted without causing the maximum amount of memory that can be consumed to be exceeded; and
a mechanism for granting the memory allocation request.

15. The computer system of any of claims 9 to 14, further comprising:
a mechanism for receiving, from a particular process running within the particular non-global operating system partition, a request for information pertaining to all resources; and
a mechanism for providing, to the particular process, information pertaining only to the one or more resources in the first resource pool, even though the computer system comprises other resources.

## Patentansprüche

1. Verfahren, das durch eine Betriebssystem ausgeführt wird, das auf einem Computersystem (500) ausgeführt wird, wobei das Verfahren Folgendes umfasst:
Aufbauen innerhalb einer globalen Betriebssystemumgebung (100), die durch das Betriebssystem bereitgestellt wird und einen Kernel (150) besitzt, mehrerer nicht globaler Betriebssystem-Partitionen (140a, 140b), die dazu dienen, Prozesse (170), die in einer nicht globalen Betriebssystem-Partition laufen, von anderen nicht globalen Betriebssystem-Partitionen in der globalen Betriebssystemumgebung zu isolieren, wobei eine Verstärkung von Grenzen zwischen den nicht globalen Betriebssystem-Partitionen durch den Kernel ausgeführt wird;
Zuordnen in einer Zuordnungsdatenstruktur (204) einer Zonen-ID für eine besondere nicht globale Betriebssystem-Partition zu einer Referenz auf einen ersten Betriebsmittel-Pool (202), der ein oder mehrere Betriebsmittel enthält, wobei die Betriebsmittel in dem ersten Betriebsmittel-Pool eine Untermenge der Gesamtmenge von Betriebsmitteln, die auf dem Computersystem verfügbar sind, sind; und
Sicherstellen, dass Prozesse, die in der besonderen nicht globalen Betriebssystem-Partition laufen, nur die Betriebsmittel in dem ersten Betriebsmittel-Pool verwenden dürfen, umfassend das Zuordnen jedes Prozesses, der in der besonderen nicht globalen Betriebssystem-Partition läuft, zu dem ersten Betriebsmittel-Pool in einer Datenstruktur, die dem Prozess zugeordnet ist, unter Verwendung der Zonen-ID und der Referenz auf den ersten Betriebsmittel-Pool;
Empfangen einer Angabe, dass eine besondere nicht globale Betriebssystem-Partition statt dem ersten Betriebsmittel-Pool einem zweiten Betriebsmittel-Pool zugeordnet werden soll, wobei der zweite Betriebsmittel-Pool von dem ersten Betriebsmittel-Pool verschieden ist und wobei der zweite Betriebsmittel-Pool ein oder mehrere Betriebsmittel enthält;
Zuordnen in der Zuordnungsdatenstruktur der besonderen nicht globalen Betriebssystem-Partition zu einer Referenz auf den zweiten Betriebsmittel-Pool statt auf den ersten Betriebsmittel-Pool; und
Sicherstellen, dass Prozesse, die in der besonderen nicht globalen Betriebssystem-Partition laufen, nur die Betriebsmittel in dem zweiten Betriebsmittel-Pool verwenden dürfen, umfassend das Zuordnen jedes Prozesses, der in der besonderen nicht globalen Betriebsmittel-Partition läuft, zu dem zweiten Betriebsmittel-Pool statt dem ersten Betriebsmittel-Pool in der Datenstruktur, die dem Prozess zugeordnet ist, unter Verwendung der Zonen-ID und der Referenz auf den zweiten Betriebsmittel-Pool.

2. Verfahren nach Anspruch 1, wobei der erste Betriebsmittel-Pool einen oder mehrere Prozessoren (504) umfasst.

3. Verfahren nach Anspruch 2, wobei das Sicherstellen Folgendes umfasst: Zuweisen von Arbeit von Prozessen, die in der besonderen nicht globalen Betriebssystem-Partition laufen, nur zu dem einen oder den mehreren Prozessoren in dem ersten Betriebsmittel-Pool.

4. Verfahren nach Anspruch 1, wobei der erste Betriebsmittel-Pool eine Angabe eines maximalen Speicherplatzes (506), der verbraucht werden darf, umfasst.

5. Verfahren nach Anspruch 4, wobei das Sicherstellen Folgendes umfasst:
Empfangen von einem besonderen Prozess, der in der besonderen nicht globalen Betriebssystem-Partition läuft, einer Speicherzuweisungsanforderung;
Bestimmen, ob die Gewährung der Speicherzuweisungsanforderung bewirken würde, dass der maximale Speicherplatz, der verbraucht werden darf, überschritten wird; und
in Reaktion auf eine Bestimmung, dass die Gewährung der Speicherzuweisungsanforderung nicht bewirken würde, dass der maximale Speicherplatz, der verbraucht werden darf, überschritten wird, Gewähren der Speicherzuweisungsanforderung.

6. Verfahren nach Anspruch 5, wobei das Sicherstellen ferner Folgendes umfasst:
in Reaktion auf eine Bestimmung, dass die Gewährung der Speicherzuweisungsanforderung bewirken würde, dass der maximale Speicherplatz, der verbraucht werden darf, überschritten wird, Beenden des Zuweisens von ausreichend Speicher von einem oder mehreren anderen Prozessen, um zu ermöglichen, dass die Speicherzuweisungsanforderung gewährt wird, ohne zu bewirken, dass der maximale Speicherplatz, der verbraucht werden darf, überschritten wird; und
Gewähren der Speicherzuweisungsanforderung.

7. Verfahren nach einem vorhergehenden Anspruch, wobei das Betriebssystem auf einem Computersystem (500) ausgeführt wird und wobei das Verfahren ferner Folgendes umfasst:
Empfangen von einem besonderen Prozess, der in der besonderen nicht globalen Betriebssystem-Partition läuft, einer Anforderung von Informationen, die alle Betriebsmittel betreffen; und
Bereitstellen für den besonderen Prozess von Informationen, die nur das eine oder die mehreren Betriebsmittel in dem ersten Betriebsmittel-Pool betreffen, selbst wenn das Computersystem andere Betriebsmittel umfasst.

8. Computerprogramm, das Befehle enthält, um das Verfahren nach einem vorhergehenden Anspruch zu implementieren.

9. Computersystem, das Folgendes umfasst:
ein Betriebssystem, wobei das Betriebssystem Folgendes enthält:
einen Kernel (150);
einen Mechanismus, um in einer globalen Betriebssystemumgebung (100), die durch das Betriebssystem bereitgestellt wird, mehrere nicht globale Betriebssystem-Partitionen (140a, 140b) aufzubauen, die dazu dienen, Prozesse (170), die in einer nicht globalen Betriebssystem-Partition laufen, von anderen nicht globalen Betriebssystem-Partitionen in der globalen Betriebssystemumgebung zu isolieren, wobei durch den Kernel eine Verstärkung von Grenzen zwischen den nicht globalen Betriebssystem-Partitionen ausgeführt wird;
einen Mechanismus zum Zuordnen in einer Zuordnungsdatenstruktur (204) einer Zonen-ID einer besonderen nicht globalen Betriebssystem-Partition zu einer Referenz auf einen ersten Betriebsmittel-Pool (202), der ein oder mehrere Betriebsmittel enthält, wobei die Betriebsmittel in dem ersten Betriebsmittel-Pool eine Untermenge der Gesamtmenge von Betriebsmitteln, die auf dem Computersystem verfügbar sind, sind;
einen Mechanismus, um sicherzustellen, dass Prozesse, die in der besonderen nicht globalen Betriebssystem-Partition laufen, nur die Betriebsmittel in dem ersten Betriebsmittel-Pool verwenden dürfen, der einen Mechanismus zum Zuordnen jedes Prozesses, der in der besonderen nicht globalen Betriebssystem-Partition läuft, zu dem ersten Betriebsmittel-Pool in einer Datenstruktur, die dem Prozess zugeordnet ist, unter Verwendung der Zonen-ID und der Referenz auf den ersten Betriebsmittel-Pool enthält;
einen Mechanismus, um eine Angabe zu empfangen, dass die besondere nicht globale Betriebssystem-Partition statt dem ersten Betriebsmittel-Pool einem zweiten Betriebsmittel-Pool zugeordnet werden soll, wobei der zweite Betriebsmittel-Pool von dem ersten Betriebsmittel-Pool verschieden ist und wobei der zweite Betriebsmittel-Pool ein oder mehrere Betriebsmittel enthält;
einen Mechanismus zum Zuordnen in der Zuordnungsdatenstruktur der Zonen-ID für die besondere nicht globale Betriebssystem-Partition zu einer Referenz auf den zweiten Betriebsmittel-Pool statt auf den ersten Betriebsmittel-Pool; und
einen Mechanismus, um sicherzustellen, dass Prozesse, die in der besonderen nicht globalen Betriebssystem-Partition laufen, nur die Betriebsmittel in dem zweiten Betriebsmittel-Pool verwenden dürfen, der einen Mechanismus zum Zuordnen jedes Prozesses, der in der besonderen nicht globalen Betriebssystem-Partition läuft, zu dem zweiten Betriebsmittel-Pool statt zu dem ersten Betriebsmittel-Pool in der Datenstruktur, die dem Prozess zugeordnet ist, unter Verwendung der Zonen-ID und der Referenz auf den zweiten Betriebsmittel-Pool enthält.

10. Computersystem nach Anspruch 9, wobei der erste Betriebsmittel-Pool eine oder mehrere Prozessoren (504) umfasst.

11. Computersystem nach Anspruch 10, wobei der Mechanismus zum Sicherstellen Folgendes umfasst:
einen Mechanismus zum Zuweisen von Arbeit von Prozessen, die in der besonderen nicht globalen Betriebssystem-Partition laufen, nur zu dem einen oder den mehreren Prozessoren in dem ersten Betriebsmittel-Pool.

12. Computersystem nach Anspruch 9, wobei der erste Betriebsmittel-Pool eine Angabe eines maximalen Speicherplatzes, der verbraucht werden darf, enthält.

13. Computersystem nach Anspruch 12, wobei der Mechanismus zum Sicherstellen Folgendes umfasst:
einen Mechanismus, um von einem besonderen Prozess, der in der besonderen nicht globalen Betriebssystem-Partition läuft, eine Speicherzuweisungsanforderung zu empfangen;
einen Mechanismus, um zu bestimmen, ob die Gewährung der Speicherzuweisungsanforderung bewirken würde, dass der maximale Speicherplatz, der verbraucht werden darf, überschritten wird; und
einen Mechanismus, um in Reaktion auf eine Bestimmung, dass die Gewährung der Speicherzuweisungsanforderung nicht bewirken würde, dass der maximale Speicherplatz, der verbraucht werden darf, überschritten wird, die Speicherzuweisungsanforderung zu gewähren.

14. Computersystem nach Anspruch 13, wobei der Mechanismus zum Sicherstellen ferner Folgendes umfasst:
einen Mechanismus, um in Reaktion auf eine Bestimmung, dass die Gewährung der Speicherzuweisungsanforderung bewirken würde, dass der maximale Speicherplatz, der verbraucht werden darf, überschritten wird, die Zuweisung von ausreichend Speicher von einem oder mehreren anderen Prozessen zu beenden, um zu ermöglichen, dass die Speicherzuweisungsanforderung gewährt werden kann, ohne zu bewirken, dass der maximale Speicherplatz, der verbraucht werden darf, überschritten wird; und
einen Mechanismus, um die Speicherzuweisungsanforderung zu gewähren.

15. Computersystem nach einem der Ansprüche 9 bis 14, das ferner Folgendes umfasst:
einen Mechanismus, um von einem besonderen Prozess, der in der besonderen nicht globalen Betriebssystem-Partition läuft, eine Anforderung für Informationen, die alle Betriebsmittel betreffen, zu empfangen; und
einen Mechanismus, um für den besonderen Prozess Informationen, die nur das eine oder die mehreren Betriebsmittel in dem ersten Betriebsmittel-Pool betreffen, bereitzustellen, selbst wenn das Computersysteme andere Betriebsmittel enthält.

## Revendications

1. Procédé exécuté par un système d'exploitation exécuté sur un système informatique (500), le procédé comprenant :
l'établissement, dans un environnement de système d'exploitation global (100) fourni par le système d'exploitation et ayant un noyau (150), d'une pluralité de partitions de système d'exploitation non globales (140a, 140b) qui servent à isoler des processus (170) exécutés dans une partition de système d'exploitation non globale d'autres partitions de système d'exploitation non globales dans l'environnement de système d'exploitation global, dans lequel l'application de frontières entre les partitions de système d'exploitation non globales est effectuée par le noyau ;
l'association, dans une structure de données d'association (204), d'un ID de zone pour une partition de système d'exploitation non globale particulière avec une référence à un premier bloc de ressources (202) comprenant une ou plusieurs ressources, dans laquelle les ressources dans le premier bloc de ressources sont un sous-ensemble de l'ensemble total des ressources disponibles sur le système informatique ; et
la garantie que les processus exécutés dans la partition de système d'exploitation non globale particulière sont autorisés à utiliser uniquement les ressources dans le premier bloc de ressources, comportant l'association à chaque processus exécuté dans la partition de système d'exploitation non globale particulière du premier bloc de ressources, dans une structure de données associée au processus utilisant l'ID de zone et la référence au premier bloc de ressources ;
la réception d'une indication que la partition de système d'exploitation non globale particulière doit être associée à un second bloc de ressources au lieu du premier bloc de ressources, dans lequel le second bloc de ressources est différent du premier bloc de ressources, et dans lequel le second bloc de ressources comprend une ou plusieurs ressources ;
l'association, dans la structure de données d'association, de l'ID de zone de la partition de système d'exploitation non globale particulière à une référence au second bloc de ressources au lieu du premier bloc de ressources ; et
la garantie que les processus exécutés dans la partition de système d'exploitation non globale particulière sont autorisés à utiliser uniquement les ressources dans le second bloc de ressources, comportant l'association à chaque processus exécuté dans la partition de système d'exploitation non globale particulière du second bloc de ressources au lieu du premier bloc de ressources, dans la structure de données associée au processus utilisant l'ID de zone et la référence au second bloc de ressources.

2. Procédé selon la revendication 1, dans lequel le premier bloc de ressources comprend un ou plusieurs processeurs (504).

3. Procédé selon la revendication 2, dans lequel la garantie comprend :
l'attribution du travail des processus exécutés dans la partition de système d'exploitation non globale particulière uniquement aux un ou plusieurs processeurs dans le premier bloc de ressources.

4. Procédé selon la revendication 1, dans lequel le premier bloc de ressources comprend une indication d'une quantité maximum de ressources (506) pouvant être consommées.

5. Procédé selon la revendication 4, dans lequel la garantie comprend :
la réception, depuis un processus particulier exécuté dans la partition de système d'exploitation non globale particulière, d'une requête d'attribution de mémoire ;
la détermination que l'acceptation de la requête d'attribution de mémoire entraînerait ou non un dépassement de la quantité maximum de mémoire pouvant être consommée ; et
en réponse à une détermination que l'acceptation de la requête d'attribution de mémoire n'entraînerait pas un dépassement de la quantité maximum de mémoire pouvant être consommée, l'acceptation de la requête d'attribution de mémoire.

6. Procédé selon la revendication 5, dans lequel la garantie comprend en outre :
en réponse à une détermination que l'acceptation de la requête d'attribution de mémoire entraînerait un dépassement de la quantité maximum de mémoire pouvant être consommée, la désattribution d'une quantité suffisante de mémoire d'un ou plusieurs autres processus pour permettre l'acceptation de la requête d'attribution de mémoire sans que la quantité maximum de mémoire pouvant être consommée soit dépassée ; et
l'acceptation de la requête d'attribution de mémoire.

7. Procédé selon l'une quelconque des revendications précédentes, dans lequel le système d'exploitation est exécuté sur un système informatique (500), et dans lequel le procédé comprend en outre :
la réception, depuis un processus particulier exécuté dans la partition de système d'exploitation non globale particulière, d'une requête d'informations sur toutes les ressources ; et
la fourniture, au processus particulier, d'informations sur seulement les une ou plusieurs ressources dans le premier bloc de ressources, même si le système informatique comprend d'autres ressources.

8. Programme informatique comprenant des instructions pour mettre en oeuvre le procédé selon l'une quelconque des revendications précédentes.

9. Système informatique comprenant :
un système d'exploitation, ledit système d'exploitation comportant :
un noyau (150) ;
un mécanisme d'établissement, dans un environnement de système d'exploitation global (100) fourni par le système d'exploitation, d'une pluralité de partitions de système d'exploitation non globales (140a, 140b) qui servent à isoler des processus (170) exécutés dans une partition de système d'exploitation non globale d'autres partitions de système d'exploitation non globales dans l'environnement de système d'exploitation global, dans lequel l'application de frontières entre les partitions de système d'exploitation non globales est effectuée par le noyau ;
un mécanisme d'association, dans une structure de données d'association (204), d'un ID de zone pour une partition de système d'exploitation non globale particulière avec une référence à un premier bloc de ressources (202) comprenant une ou
plusieurs ressources, dans laquelle les ressources dans le premier bloc de ressources sont un sous-ensemble de l'ensemble total des ressources disponibles sur le système informatique ; et
un mécanisme de garantie que les processus exécutés dans la partition de système d'exploitation non globale particulière sont autorisés à utiliser uniquement les ressources dans le premier bloc de ressources, comportant un mécanisme d'association à chaque processus exécuté dans la partition de système d'exploitation non globale particulière du premier bloc de ressources, dans une structure de données associée au processus utilisant l'ID de zone et la référence au premier bloc de ressources ;
un mécanisme de réception d'une indication que la partition de système d'exploitation non globale particulière doit être associée à un second bloc de ressources au lieu du premier bloc de ressources, dans lequel le second bloc de ressources est différent du premier bloc de ressources, et dans lequel le second bloc de ressources comprend une ou plusieurs ressources ;
un mécanisme d'association, dans la structure de données d'association, de l'ID de zone de la partition de système d'exploitation non globale particulière à une référence au second bloc de ressources au lieu du premier bloc de ressources ; et
un mécanisme de garantie que les processus exécutés dans la partition de système d'exploitation non globale particulière sont autorisés à utiliser uniquement les ressources dans le second bloc de ressources, comportant un mécanisme d'association à chaque processus exécuté dans la partition de système d'exploitation non globale particulière du second bloc de ressources au lieu du premier bloc de ressources, dans la structure de données associée au processus utilisant l'ID de zone et la référence au second bloc de ressources.

10. Système informatique selon la revendication 9, dans lequel le premier bloc de ressources comprend un ou plusieurs processeurs (504).

11. Système informatique selon la revendication 10, dans lequel le mécanisme de garantie comprend :
un mécanisme d'attribution du travail des processus exécutés dans la partition de système d'exploitation non globale particulière uniquement aux un ou plusieurs processeurs dans le premier bloc de ressources.

12. Système informatique selon la revendication 9, dans lequel le premier bloc de ressources comprend une indication d'une quantité maximum de mémoire pouvant être consommées.

13. Système informatique selon la revendication 12, dans lequel le mécanisme de garantie comprend :
un mécanisme de réception, depuis un processus particulier exécuté dans la partition de système d'exploitation non globale particulière, d'une requête d'attribution de mémoire ;
un mécanisme de détermination que l'acceptation de la requête d'attribution de mémoire entraînerait un dépassement de la quantité maximum de mémoire pouvant être consommée ; et
un mécanisme d'acceptation, en réponse à une détermination que l'acceptation de la requête d'attribution de mémoire n'entraînerait pas un dépassement de la quantité maximum de mémoire pouvant être consommée, de la requête d'attribution de mémoire.

14. Système informatique selon la revendication 13, dans lequel le mécanisme de garantie comprend en outre :
un mécanisme de désattribution, en réponse à une détermination que l'acceptation de la requête d'attribution de mémoire entraînerait un dépassement de la quantité maximum de mémoire pouvant être consommée, d'une quantité suffisante de mémoire d'un ou plusieurs autres processus pour permettre l'acceptation de la requête d'attribution de mémoire sans que la quantité maximum de mémoire pouvant être consommée soit dépassée ; et
un mécanisme d'acceptation de la requête d'attribution de mémoire.

15. Système informatique selon l'une quelconque des revendications 9 à 14, comprenant en outre :
un mécanisme de réception, depuis un processus particulier exécuté dans la partition de système d'exploitation non globale particulière, d'une requête d'informations sur toutes les ressources ; et
un mécanisme de fourniture, au processus particulier, d'informations sur seulement les une ou plusieurs ressources dans le premier bloc de ressources, même si le système informatique comprend d'autres ressources.
